# EUROPEAN PATENT APPLICATION

(11) **EP 1 372 069 A2**
(43) Date of publication of application: **17.12.2003**
(21) Application number: 03253698.9
(22) Date of filing: 11.06.2003
(51) Int. Cl.: G06F 9/445

(54) **Method system and software for configuring a graphics processing communication mode**

(30) Priority: 12.06.2002 US 388084 P
(71) Applicant: ATI Technologies Inc., Markham, Ontario L3T 7X6 (CA)
(72) Inventor: Cheng, Jeffrey Gongxian, North York, Ontario M2K 2A4 (CA)
(74) Representative: Howe, Steven

(57) **Abstract**

A system and method for configuring graphics processing communication among a graphics device, a chipset (a host bridge), and a data processor is shown and described. A graphics driver is used to configure graphics communication within an information handling system using existing information stored in system memory or installing and running a configuration routine to determine a method of graphics communication. A configuration routine applies tests to determine a mode of data transfer between the system and the graphics device. Test results associated with the configuration routine are stored and can be loaded upon subsequent system startups to configure communications between the system and the graphics device. A reliable mode for communicating between the graphics device and the information handling system is established to allow the graphics device to be used without requiring excessive interaction by a user.

## Description

The present disclosure relates generally to graphics processing and more particularly to a method, system, and software for conbguring a graphics processing communication mode.

Configuring various hardware components to function together is often accomplished by a trial and error approach due to the diversity of hardware available. For example, it is often necessary to use a trial and error approach to integrate data bus-equipped motherboards to peripheral devices, such as graphics display devices. In order to perform such an integration, a technician or user may tune communication settings such as data transfer rates by making manual, i.e., user-initiated adjustments. Typically, integration of peripheral devices, such as plug and play devices, is generally more difficult between graphics display devices and motherboards, in particular motherboards equipped with an accelerated graphics port (AGP).

A graphics display device in a computer system communicates with a data processor through a data bus, such as an AGP bus. A display driver, run by the data processor, is responsible for issuing commands that generate graphics rendering operations on the screen. The execution of commands by the graphics devices is subject to the stability of the AGP bus. There are many manufactured variations of AGP bus controllers available on the market, and there are a variety of AGP-equipped motherboards made by numerous manufacturers. As a result, the compatibility of the AGP bus between the motherboard AGP port and the AGP port on the graphics display device varies and the graphics rendering commands may be lost or corrupted, causing a hanging application specific integrated circuit (ASIC) or a corrupted display. Because of the variety of system platforms available on the market, it is difficult for the display driver to pre-determine the quality of the AGP bus, and to take appropriate measures to ensure proper transport of the rendering commands on the bus.

User intervention has been needed to solve this integration problem between a graphics display device and an AGP-equipped motherboard. A control interface allows a user to configure the driver with various AGP-related bus settings. The user must then determine by trial and error, the proper bus settings that reduce or eliminate the occurrences of the problems. On each trial, if the system hangs, the settings need to be adjusted and the system rebooted. This method requires an experienced end user, is time consuming, and requires "manual tuning" for each graphics display device and AGP-equipped motherboard combination.

Another integration approach requires the driver to know beforehand the specific AGP bus settings that provide the least problematic performance for each possible combination of a graphics display device and an AGP-equipped motherboard. However, having multiple bus settings for multiple combinations is problematic because of the need to keep up with emerging technology and variations from multiple manufacturers. Additionally, identification issues compound this problem. Unlike the graphics display device, which typically has a device identification (ID), it is difficult for a driver to identify a motherboard made by a particular manufacturer. Furthermore, even when predetermined settings are used, incompatibilities caused by marginal designs can occur. From the discussion above, it will be apparent that a solution to better integrate data buses within motherboards and graphics display devices is needed.

According to a first aspect of the present invention, a method of configuring graphics processing communication comprises:
generating a set of test results for the graphics device with the system configured in a first communication mode, wherein the first communication mode includes one or more communication settings; and,
when the test results indicate that the first communication mode is not stable, configuring the system in a second communication mode, wherein the second communication mode includes at least one communication setting that is different than the settings in the first communication mode.

According to a second aspect of the present invention, a method of configuring graphics processing communication comprises:
generating a set of test results for the graphics device with the system configured in a first communication mode, wherein the first communication mode includes one or more communication settings, and the test results are indicative of the stability of communication between the graphics device and a graphics data bus of the system; and,
when the test results indicate that the first communication mode is not stable, configuring the system in a second communication mode, wherein the second communication mode includes settings that provide for more stable communication between the graphics device and the graphics data bus.

According to a third aspect of the present invention, a method of configuring graphics processing communication comprises the steps of:
during a first boot sequence for the system, testing communication between a data bus of the system and a data port of a graphics device with the system in a first communication mode for rendering graphics wherein the first communication mode includes one or more communication settings;
storing data indicative of whether the first communication mode for rendering graphics is stable;
when testing indicates that the first communication mode for rendering graphics is not stable, configuring the system to automatically enter the second communication mode upon a subsequent boot sequence, wherein the second communication mode includes settings that provide for more stable communication between the graphics device and the graphics data bus than the first communication mode.

According to a fourth aspect of the present invention, a graphics processing system comprises:
a data processor;
a system memory having an input/output buffer;
a graphics device having an input port;
a graphics data bus, having an input/output buffer, for communicating with the graphics device;
a chipset having a first port coupled to the input/output buffer of the data bus, a second port coupled to the input/output buffer of the system memory, and a third port coupled to the input/output port of the graphics device;
wherein the system memory further comprises software, executable by the data processor, for generating a set of test results for the graphics device with the system configured in a first communication mode, wherein the first communication mode includes one or more communication settings, and the test results are indicative of the stability of communication between the graphics device and the graphics data bus; and,
configuring the system in a second communication mode, when the test results indicate that the first communication mode is not stable, wherein the second communication mode includes settings that provide for more stable communication between the graphics device and the graphics data bus.

According to a fifth aspect of the present invention, a computer program includes instructions for configuring graphics processing communication during a boot process of a system having a graphics device, wherein, when executed, the program of instructions:
generates a set of test results for the graphics device with the system configured in a first communication mode, wherein the first communication mode includes one or more communication settings, and the test results are indicative of the stability of communication between the graphics device and a graphics data bus of the system; and,
when the test results indicate that the first communication mode is not stable, configures the system in a second communication mode, wherein the second communication mode includes settings that provide for more stable communication between the graphics device and the graphics data bus.

Specific embodiments of the present disclosure are shown and described in the drawings presented herein. Various advantages, features and characteristics of the present disclosure, as well as methods, operations and functions of related elements of structure, and the combination of parts and economies of manufacture, will become apparent upon consideration of the following description and claims with reference to the accompanying drawings, all of which form a part of this specification, and wherein:
FIG. 1 is a block diagram illustrating an information handling system having a graphics device integrated with a chipset, according to one embodiment of the present disclosure;
FIG. 2 is a flow diagram illustrating a method of configuring communication in an information handling system, according to one embodiment of the present disclosure;
FIG. 3 is a flow diagram illustrating operation of a configuration routine associated with the flow of FIG. 2, according to one embodiment of the present disclosure; and
FIG. 4 is a block diagram illustrating a graphical user interface, according to one embodiment of the present disclosure.

At least one embodiment of the present disclosure provides a method of configuring, during a start-up or boot process, communication with a graphics device within an information handling system. The method includes the step of generating a set of test results for the graphics device with the system configured in a first communication mode, e.g., a default communication mode. The method preferably uses a configuration routine for this purpose. A graphics processing communication mode is defined by a group of one or more graphics processing communication settings associated with the graphics device (and typically other system components as well). Each mode generally represents system communication in accordance with at least part of a bus protocol associated with a graphics data bus. For example, in one embodiment, the graphics data bus includes an accelerated graphics port (AGP) data bus. Accordingly, a default communication mode may represent AGP data transfer settings to support AGP-accelerated graphics rendering and/or direct memory access (DMA) support for AGP data transfers between a local memory of the graphics device and system memory. Other data buses and protocols can also be supported in addition to, or in place of, AGP data buses and AGP protocols. For example, peripheral component interconnect (PCI) data bus protocols and next generation input/output interconnect data bus protocols can also be supported without departing from the scope of the present disclosure.

When the test results indicate that the first communication mode is not stable (e.g., because it is not supported by or available in the system), the method further includes configuring the system in a second or alternative communication mode that has at least one communication setting that is different than the first communication mode. The second communication mode is a mode determined by the graphics driver and/or configuration routine to be a stable and valid mode for graphics processing within the system. For example, if the first communication mode includes AGP protocol support of accelerated graphics rendering, the second communication mode may include PCI protocol support of accelerated graphic rendering or, alternatively, software rendering. The method may further include the step of continuing the boot process in the second communication mode that is deemed appropriate. This advantageously avoids the need for a user to engage in attempts at trial and error configuration to obtain stable graphics operation. Communication can also be automatically established upon subsequent system startups based on test results identified during prior testing by the configuration routine.

When test results do not validate the first communication mode, the configuration routine preferably determines the most appropriate and stable graphics processing communication mode (i.e., the most appropriate communication settings) after a single test suite pass. However, in other embodiments where the system is capable of being configured in accordance with a plurality of alternatives to the first (e.g., default) communication mode, the method may further include retesting for compliance with one of the alternative communication modes. In this case, if the test results indicate compliance, the system may be configured for that alternative communication mode. Otherwise, the system can be re-tested for another alternative mode or, if only one possible alternative mode remains untested, the system may simply be configured according to that last remaining alternative mode.

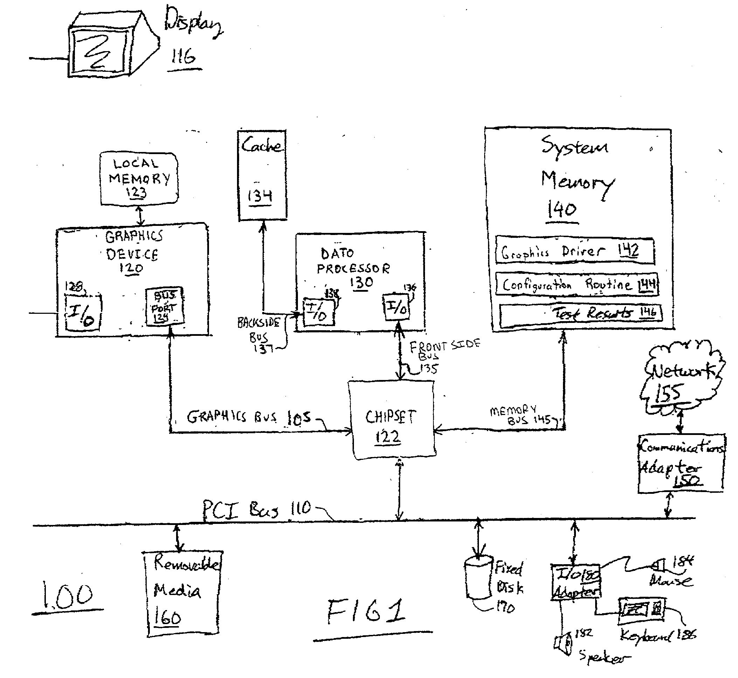

Referring to FIG. 1, an information handling system 100 is shown, according to at least one embodiment of the present disclosure. Information handling system 100 renders graphics for a display device 116 by transferring graphics data along a data bus, such as graphics bus 105. For purposes of the present description, graphics bus 105 is also sometimes referred to herein as AGP bus 105, however it will be appreciated that other graphics data buses can be used in addition to or in place of an AGP data bus without departing from the scope of the present disclosure. For example, data bus 105 can include a PCI bus or a third/next generation input/output interconnect bus, such as a PCI-Express data bus. In the illustrated embodiment, a chipset 122 handles communication between AGP bus 105, a PCI bus 110, a data processor 130, and a system memory 140. A graphics driver 142 is stored in system memory 140. Driver 142 directs how graphics communication and control are established within system 100. Graphics driver 142 may be accessed and placed in system memory 140 from a variety of sources such as removable media 160, a fixed disk 170, or a network 155. Other devices may exist along PCI bus 110 that are capable of storing and placing the graphics driver 142 in system memory 140.

Chipset 122 includes a bus controller, or host bridge, (not shown) which handles communication between various devices of system 100 by managing communications on buses within system 100, including buses 105 and 110, a front-side bus 135 and a memory bus 145. For example, chipset 122 can communicate with data processor 130 through an interface with front-side bus 135. Chipset 122 can access system memory 140 through an interface with memory bus 145. Chipset 122 can additionally provide communication with graphics device 120 through an interface with graphics bus 105. Furthermore, chipset 122 can provide communication with peripheral devices of system 100, such as removable media 160, an input/output (I/O) adapter 180, a speaker 182, a mouse 184, a keyboard 186, fixed disk 170, or a communications adapter 150 (that provides a link to network 155), through interfaces with other buses such as PCI bus 110.

For example, chipset 122 can provide memory control functionality by passing data between portions of system 100 through its bus interfaces. Chipset 122 can connect front-side bus 135 with memory bus 145 to allow data processor 130 to access data directly from system memory 140. Chipset 122 can provide direct memory access (DMA) functionality, such as for allowing graphics device 120 to access data in system memory 140, through interfaces with AGP bus 105 and memory bus 145. It should be noted that chipset 122 can include other interfaces to provide communication with other devices. For example, chipset 122 can include a universal serial bus (USB) interface for communicating with devices on a USB bus.

Chipset 122 may also include interfaces to support other data buses, such as the Intel Hub Architecture 1 and 2 data buses. In one embodiment, chipset 122 can further provide an interface to a next generation input/output interconnectivity data bus, such as the PCI-Express data bus. Furthermore, chipset 122 can include a single or multiple chipsets for integrating devices within system 100. In one embodiment, chipset 122 includes a data switch to support expanded bus topologies, such as to support PCI-Express endpoints used to interface with PCI-Express compatible peripheral devices. In addition, the data bus 105 used to interface the graphics device 120 with the chipset 122 need not be dedicated to the graphics device 120 as illustrated in FIG. 1 and can also interface with other devices, such as the PCI bus 110 or a PCI-Express data bus (not shown).

Data processor 130 includes a processing component, such as a central processing unit (CPU), used to process data and commands within system 100. Data processor 130 receives commands and data from front-side bus 135 through an I/O buffer, such as I/O port 136. Data processor 130 can access and process data associated with applications in system memory 140, including graphics driver 142 and configuration routine 144 (which may form part of driver 142). Data processor 130 can receive and process data received from other devices integrated within chipset 122. Data processor 130 can also return processed data to integrated devices, such as graphics device 120, through chipset 122 and front-side bus 135. Similarly data processor 130 can store processed data in system memory 140. In one embodiment, data processor 130 temporarily stores data in cache 134 for faster access than from system memory 140. In the illustrated embodiment, data processor 130 accesses cache 134 through a back-side bus 137 connected to an I/O port 138 of the data processor 130. It will be appreciated that data processor 130 can execute software to render graphics for display on device 116.

Graphics device 120 receives graphics data through a bus port 124. In one embodiment, graphics device 120 is capable of receiving data in accordance with various different protocols, such as the AGP protocol or PCI protocol, using a data bus, e.g., bus 105, interfaced with the bus port 124. As already indicated, other bus protocols can also be supported, such as the PCI-Express protocol without departing from the scope of the present disclosure. The graphics device 120 is further capable of rendering and formatting the graphics data as required for presentation on display device 116. Graphics device 120 can also directly access local memory 123. In one embodiment, local memory 123 can store prepared graphics data ready to be sent to display device 116, e.g., through I/O port 128. Display device 116 is a device compatible with graphics device 120, such as a video graphics array (VGA) compatible display device. In the illustrated embodiment, display device 116 represents a cathode ray tube (CRT) but device 116 may generally represent a plasma display, a television, or any other type of device capable of displaying rendered graphics data associated with graphics device 120. Furthermore, while bus port 124 is illustrated as an AGP bus port, it will be appreciated that other bus ports may be supported, as previously discussed, in place of or addition to an AGP bus port. For example, bus port 124 can include support for a PCI-Express data bus, and generally any suitable data bus may be supported in addition to or in place of the data buses described herein without departing from the scope of the present disclosure. In particular, the present disclosure can be used to support future data bus technology and the type of data bus referred to herein is not intended to be limiting.

Graphics data is rendered in system 100 for presentation on display device 116. In one embodiment, the graphics data is processed using hardware acceleration through the use of the graphics device 120. The graphics data, and necessary graphics commands, can be transferred from the system memory 140 to the graphics device 120 using a bus, such as AGP bus 105. AGP bus 105 is capable of being used to transfer the data using the AGP protocol or the PCI protocol. When the AGP protocol is used to transfer graphics information, the graphics device 120 is said to perform AGP-accelerated rendering. Using AGP-accelerated rendering, the graphics data is capable of being transferred to the graphics device using a particular AGP transfer rate, such as AGP 1X rate, AGP 2X rate, AGP 4X rate or AGP 8X rate, DMA transferred from system memory 140. With the AGP protocol, AGP bus 105 is dedicated for communication with graphics device 120. Once the data is transferred, graphics device 120 processes the data into display data, formatted for display device 116. The display data is then sent to display device 116 for presentation. In an alternative mode, graphics device 120 can act as a memory controller to pass data directly from graphics bus 105 to display 116.

As an alternative to AGP-accelerated rendering, AGP bus 105 may be used as a PCI bus in PCI-accelerated rendering. With the PCI protocol, graphics data is transferred from system memory 140 to graphics device 120, using DMA bus-mastering (graphics commands from memory 140 to device 120 also use DMA bus-mastering). As in AGP-accelerated rendering, the graphics data is processed by the graphics device 120 into display data for presentation on display device 116. However, the PCI protocol forces the data to be transferred to the graphics device at a slower data rate than when using the AGP protocol. With the AGP protocol, a greater plurality of data lines associated with AGP bus 105 can be utilized to transfer more data per unit time than with the PCI protocol. Furthermore, while AGP protocol transfers along AGP bus 105 are dedicated to graphics device 120, PCI protocol transfers over graphics bus 105 are typically shared among peripheral devices connected to PCI bus 110. Thus, where the PCI control logic is used to control PCI transfers over AGP bus 105 and PCI bus 110, the transfer of graphics data can be interrupted by other devices communicating thorough PCI bus 110. Accordingly, the transfer of data along bus 105 may be slower with the PCI protocol than with the AGP protocol.

Furthermore, as an alternative to AGP-accelerated rendering and PCI-accelerated rendering, software rendering may also be used. With software rendering, a software application, that is generally stored in system memory 140, provides commands for data processor 130 to process the graphics data and graphics commands. Accordingly, data processor 130 is used to generate display data from the graphics data. The display data is then sent to graphics device 120. As the display data is formatted for display device 116 by data processor 130, graphics device 120 can provide the display data to display device 116, without further rendering. As data processor 130 is also used for processing general tasks within system 100, data processor 130 is a shared resource. Processing by data processor 130 can therefore be interrupted for other devices and applications. Furthermore, graphics device 120 is generally dedicated to processing graphics data and is generally capable of processing the graphics data faster than the data processor 130. Accordingly, software may be slower than both AGP-accelerated rendering and PCI-accelerated rendering, in which a dedicated graphics-rendering resource, graphics device 120, is used.

However, when graphics device 120 is incompatible with chipset 122, processing graphics data or graphics commands in graphics device 120 can be difficult or not possible. For example, chipset 122 may not be able to support the AGP read function, a function that allows the graphics device 120 to read the data directly (e.g., through DMA bus-mastering techniques) from the system memory 140 using the AGP bus 105. This can lead to a situation where the full capability of the graphics device 120 is not realized. Typically, a graphics driver 142 is supplied with graphics device 120 and is capable of generating graphics commands understood by the graphics device 120 for processing the graphics data. Due to a variety of design and manufacturing issues, such as bus signal integrity, it is generally difficult for a driver, such as graphics driver 142, to account for all variations of chipset 122 and graphics device 120. Accordingly, default transfer rates and other settings may not function adequately and data may not be reliably transferred through AGP bus 105.

To alleviate this problem, the present invention provides for automated configuration of communication between at least some, and preferably all, components concerned with the rendering of graphics. In a preferred embodiment, this is achieved by testing system 100, and in particular graphics device 120, communication using a configuration routine 144 (i.e., a configuration computer program) and configuring system 100 based on a set of configuration test results 146. Configuration routine 144 and test results 146 may be stored in system memory 140 along with graphics driver 142. In addition, configuration routine 144 may form part of driver 142.

In known manner, graphics driver 142 interfaces graphics device 120 with other components in system 100. For example, graphics driver 142 can be used to translate graphics commands generated within system 100, such as by applications run from system memory 140, to commands that are understood by graphics device 120. Graphics driver 142 is generally installed into system memory 140 during a startup of system 100 and can be installed from a variety of computer readable media types, such as through removable media 160 or fixed disk 170.

In one embodiment of the present invention, upon an initial integration of graphics device 120 with system 100, graphics driver 142 installs configuration routine 144. Configuration routine 144 is capable of performing a suite of tests to identify communication capabilities between graphics device 120 and chipset 122.

For example configuration routine 144 can configure graphics device 120 to run tests according to a first, e.g., default, communication mode for the graphics device. For instance, a default mode can be defined by default status settings associated with graphics driver 142. In one embodiment, the default status settings define optimal or "best guess" communication settings identified by graphics driver 140 based on an identification of the particular graphics device 120. For example, the default status settings can include the maximum transfer rate supported by graphics device 120, regardless of the type of graphics bus 105 and chipset 122 in system 100. Configuration routine 144 can then test the default status settings by attempting to transfer data between system memory 140 and local memory 123 of graphics device 120. Test results associated with the configuration routine 144 are stored as test results 146. The test results can thereby indicate faulty communications settings associated with the communication mode tested, and preferably graphics driver 142 can also then use test results 146 to identify reliable communications settings for graphics device 120. These more reliable communications settings can be set, for example, by disabling the faulty communications settings revealed by the test results. Accordingly, while the reliable communications settings can represent less functionality than the communication mode associated with the default status settings, those settings generally represent more reliable functionality, as faulty or fault-prone settings are disabled. In one embodiment, test results 146 are permanently stored in non-volatile memory, such as fixed disk 170, and loaded into system memory 140 in subsequent system power ups to configure the reliable communication settings.

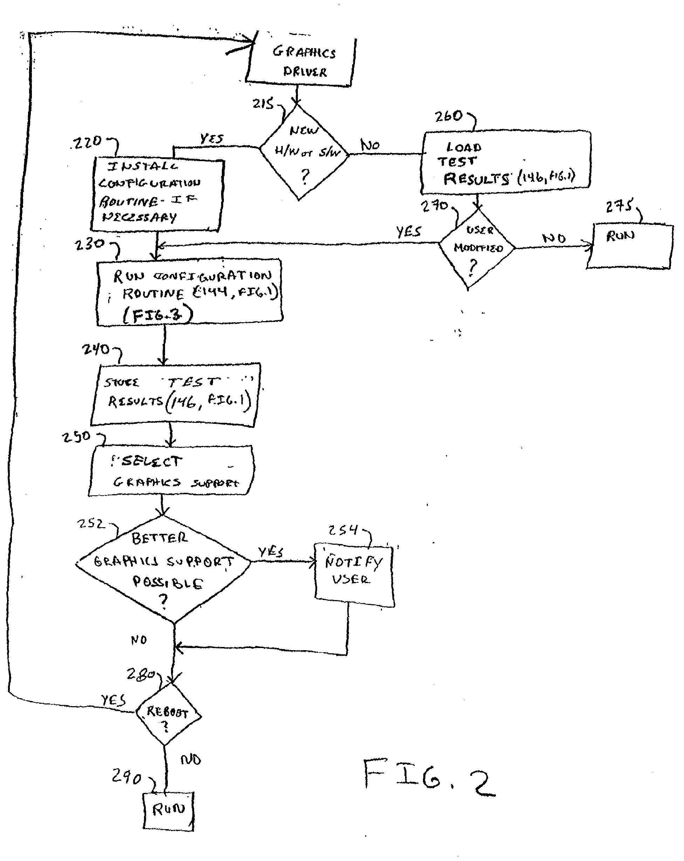

FIG. 2 illustrates a method of configuring a graphics processing communication mode in accordance with the present disclosure. For purposes of discussion, the method of FIG. 2 is discussed with reference to system 100 of FIG. 1, though it will be appreciated that the method of FIG. 2 can operate using other systems as well.

In step 210, graphics driver 142 is loaded and executed. At step 215, the graphics driver 142 determines whether new hardware or software is present in system 100. For example, once loaded, the graphics driver 142 can query the graphics device 120 and motherboard (if supported) to determine a vendor or device ID. For instance, with respect to the motherboard, a device ID relating to the motherboard's chipset, such as chipset 122, may be requested. Hardware information obtained by the graphics driver 142 during startup is compared to stored hardware ID values that identify the hardware that was present in system 100 during its last operation. If all the values match, no new hardware is present. Likewise, software revisions can be checked for upgraded or modified software. If no changes are detected, the flow proceeds to step 260. If changes are detected, or if no stored values exist, the flow proceeds to step 220.

At step 220, graphics configuration routine 144 is installed, if necessary. For example, it will generally be necessary to install configuration routine 144 during a clean install or if a new revision of graphics configuration routine 144 is available. The configuration routine 144 can be installed as an operating system service routine, such as a Windows™ Service Routine used to configure devices in Microsoft Windows™ operating systems. In one embodiment, the configuration routine 144 is installed through an installation application, such as through the InstallShield™ application associated with the Windows™ operating system. Once the graphics configuration routine 144 is installed, it may be run at step 230.

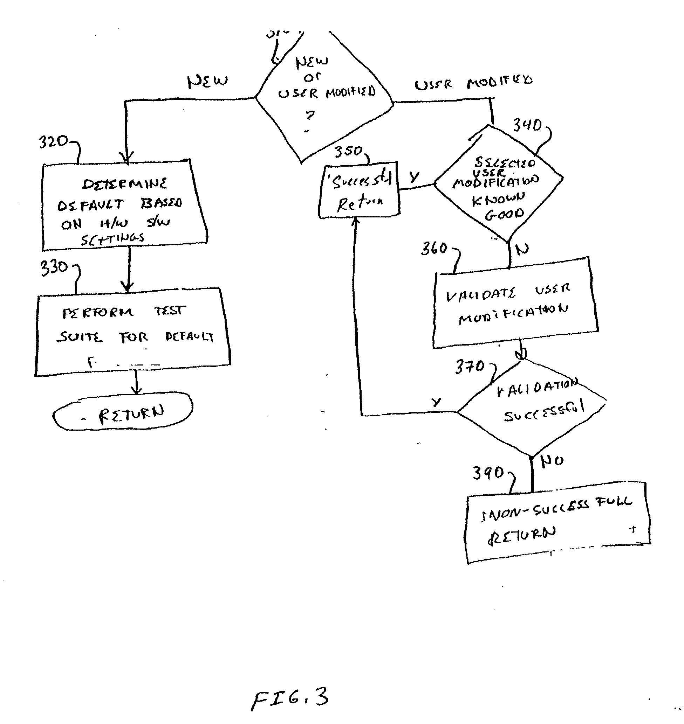

In step 230, the configuration routine 144 determines the settings for a first, e.g., a default, mode for commuaicating with the graphics device 120, and routine 144 then performs a series of tests to determine if those settings are valid, stable and operational. At step 240, after the configuration routine 144 has been run, the results 146 generated from the series of tests performed by configuration routine 144 are stored, preferably in non-volatile memory, for reference during future startup operations. It will be appreciated that in various embodiments, the storing of the test results 146 at step 240 can also be part of configuration routine 144. At step 250, a valid and stable graphics communication mode is selected based upon test results 146. Step 252 is also preferably invoked to determine whether a higher performance communication mode, the stability of which has not yet been tested, remains available. These and the other remaining steps in FIG. 2 are described further below, after first considering in more detail the operation of configuration routine 144 with reference to FIG. 3.

FIG. 3 is a flow diagram of configuration routine 144 in one embodiment. At step 310, routine 144 determines whether it is being run due to the presence of new system hardware /software or due to a user modification to the graphics communication mode (as described below). If new hardware or software has been added, or if no prior hardware or software information is available, the flow proceeds to step 320. Otherwise, the flow proceeds to step 340.

In one embodiment of step 320, communication with the graphics device 120 (FIG. 1) is initialized for a default mode characterized by one or more default communication settings for the graphics device 120. The default communication mode settings may be determined using system information that is available to graphics driver 142 and/or to configuration routine 144. For example, based upon the chipset ID, a graphics device ID, and/or the address location of graphics device 120, graphics driver 142 can determine default communication settings for the specific device implementation used. For example, these may be the default settings associated with graphics device 120 irrespective of chipset 122 and other components in system 100. Thus, for instance, the default settings may represent a 4X AGP bus-compatible communication mode. In this manner, as a starting point, graphics device 120 is allowed to boot based upon the default communication settings. Other components of system 100, in particular chipset 122, may also be initialized by certain default communication settings.

After the graphics device and chipset are initialized in the default communication mode, routine 144 performs a suite of tests at step 330 to verify that operation of graphics device 120 is stable in that mode. In one embodiment, a set of tests that are expected to be successful for the default settings are performed. For example, where system 100 has both AGP and PCI compatibility, the default settings may indicate that the five types of information or operation results shown in TABLE 1 are expected to be valid (or successful) for the current configuration. Referring to TABLE 1, these tested parameters may include the four modes of operation listed in the first column of the first four rows and the status of the graphics device chip (ASIC) in the fifth row. As shown in the five illustrative test scenarios in TABLE 1, configuration routine 144 determines whether each of the four bus operations is error-free/operational, as indicated by an "OK" table entry, or not, as indicated by an "X" entry. Similarly, the test determines whether the graphic device chip (i.e., ASIC) is operational ("OK") or hung/non-operational ("X"). In this embodiment, the default communication settings may indicate that the ASIC status is operational/accessible and that each of the bus operations (PCI READ, AGP READ, PCI WRITE, AND AGP WRITE) is operational.

| | Scenario 1 | Scenario 2 | Scenario 3 | Scenario 4 | Scenario 5 |
|---|---|---|---|---|---|
| PCI READ | OK | X | OK | OK | OK |
| AGP READ | X | X | OK | OK | X |
| PCI WRITE | OK | X | OK | OK | OK |
| AGP WRITE | X | X | OK | X | X |

**TABLE 1.**

| Test Scenarios | | | | | |
|---|---|---|---|---|---|
| GRAPHICS DEVICE (ASIC) STATUS | OK | OK | OK | OK | X |
| Driver Behavior Upon Test Completion | PCI accelerated rendering | Keep using software rendering | Switch to AGP accelerated rendering | Switch to AGP accelerated rendering: AGP write off | Keep using software rendering |
| Driver Behavior After Reboot | PCI accelerated rendering | Software rendering; | AGP accelerated rendering; fast write off | AGP accelerated rendering; AGP write off | PCI accelerated rendering |

In an alternative embodiment, the set of tests can represent a superset of tests that include those tests that are expected to be successful. For example, in some systems a given default communication mode setting may be such that an AGP WRITE is not expected to be supported. However, an AGP WRITE test may still be included in the set of tests to verify that AGP WRITES are not supported. In this manner, the configuration routine can determine if enhanced functionality beyond the default communication mode settings is possible. In one embodiment, the suite of tests includes block transfers of data between system memory 140 and local memory 123 associated with graphics device 120. The block transfers can be performed using the particular communication mode being tested, such as AGP DMA transfers at a 4X transfer rate.

Based upon the tests, graphics driver 142 can determine an appropriate and stable communication mode for device 120. It will be appreciated that the tests to be performed can be limited by the chipsets used. For example, a PCI-only chipset need not test AGP communication settings. Likewise, a chipset that supports PCI-Express will generally need to provide one or more test scenarios unique to verifying PCI-Express operation. Steps 340, 350, 360, 370 and 390 describe behavior of configuration routine 144 used to validate user-modified settings, and are best understood and discussed after further description of the flow diagram of FIG. 2.

Referring back to FIG. 2, after the set of tests of configuration routine 144 have been completed, the flow returns to step 250 of FIG. 2, where a specific graphics communication mode can be selected for use by the graphics driver 142. In the event that all of the tests for the default communication settings are successful (i.e., scenario 3 in the illustrative embodiment of TABLE 1), the default communication mode associated with the graphics device 120 is maintained. If one or more of the tests fails, then an alternative graphics communication mode is selected at step 250. For example, in scenario 4 of the embodiment in TABLE 1, the AGP write test failed. Therefore, as indicated TABLE 1, the "Driver Behavior upon Test Completion" will specify an AGP-accelerated rendering mode with AGP WRITE turned off for the current boot process. Without the determination of an appropriate alternative communication mode, continuing the boot process in the problematic default communications mode could disable graphics support, making it difficult for system 100 to provide messages to a user during or after the boot process.

In one embodiment, different alternative communications modes are identified depending on whether a reboot is to be performed. For instance, the sixth row of TABLE 1, labeled "driver behavior upon test completion," indicates a possible communications mode that may be entered when no reboot performed, while the seventh row of TABLE 1, labeled "driver behavior after reboot," indicates a (generally more advanced) communications mode that may be entered after a reboot is performed. As TABLE 1 indicates, switching between some communication modes, such as between an AGP-accelerated default mode and a PCI-accelerated mode may not require a reboot. However, in some cases where the ASIC does not respond, as in scenarios 5 in TABLE 1, a reboot may be required before proper operation can be expected.

Identifying a possible communications mode that can be configured without a reboot of system 100, allows system 100 to continue to boot with graphics support in a stable manner. As a result, the user is not confronted with the necessity to reboot and reconfigure the communication mode manually. For example, in scenarios 2 and 5 in TABLE 1, driver 142 is configured to use software rendering by the data processor upon test completion. This allows the system 100 to continue the current boot sequence with reliable graphics support, though not in a hardware accelerated graphics communication mode, such as AGP-accelerated or PCI-accelerated rendering modes. Alternatively, in scenario 1, the driver can instead be configured to operate in the current boot cycle using PCI-accelerated modes of operation, thereby disabling the problematic AGP settings of the system. (In contrast, in scenario 2, no accelerated hardware support is trouble-free, and therefore only software rendering is enabled.) It should be appreciated that while graphics driver 142 is described as identifying the communications modes, configuration routine 144 can also be used to identify and configure an appropriate communications mode based on test results 146.

It will be appreciated that chipset 122 may not meet expected default communication settings due to incompatibility issues with a bus port, such as bus port 124, on the graphics device 120. In one embodiment, the default settings will indicate the fastest data transfer rate supported by the graphics driver 142 and the graphics device 120. If the test fails at this speed, a next pass through the method of FIG. 2 will test the next slowest bus speed setting based on the fact the test failed previously. Alternatively, the testing may begin with a data rate setting predefined by a user, for example as a result of step 254 (described below).

Thus, initialization steps 220-250 are advantageous in that they allow for a system to boot successfully, even when the expected default communications link between the chipset 122 and the graphics device 120 is not operating as expected.

Referring still to the flow of FIG. 2, after the graphics communication mode is selected to assure system 100 can continue to boot with graphics support, the flow proceeds to step 252. At step 252 a determination is made on whether a higher performance communication mode, the stability of which has not yet been tested, remains available. In one embodiment, this may be determined based upon the test scenarios of TABLE 1. For example, if configuration routine 144's test results (i.e. test results 146) indicate scenario 5 in TABLE 1 and routine 144 invokes software rendering for the current boot sequence as a result, it may still be possible to achieve greater performance by subsequently entering a PCI-accelerated rendering mode. Therefore, the test results 146 and information stored at step 240 preferably allow a PCI-accelerated rendering mode to be entered (and then tested) during the next boot cycle. Optionally, when a higher performance mode is to be entered in this manner during the next reboot, a message to this effect can be provided to the user, indicating that a reboot may result in better performance. In this case, the option to reboot immediately is preferably provided to the user.

For example, as shown in the illustrative embodiment of FIG. 2, where an AGP communication mode fails, the user can be notified at step 254 that a lower AGP bus rate may still result in AGP-accelerated rendering support. Preferably, the user is given the option to i) reboot immediately, thereby trying the next lower bus rate, ii) select a specific AGP bus rate for testing during the next reboot, or iii) override any future AGP testing, thereby maintaining either a software rendering or PCI-accelerated rendering communication mode. As already indicated, when notifying the user at step 254, the user may be given the option to reboot immediately. Step 280 determines if an immediate reboot is to occur, for example due to user instruction. If so, system 100 reboots and the flow returns to step 210 where the graphics driver 142 is reloaded. If no reboot is to occur, system 100 continues to run at step 290.

If at step 215, the driver determines that no new hardware is present, the flow proceeds to step 260. In step 260, test results 146 are loaded into system memory 140. The test results 146 represent results based on a previous execution of configuration routine 144, (i.e., the configuration routine installed in step 220). The test results 146 can be loaded from nonvolatile storage, such as from fixed disk 170.

In step 270, it is determined if any communication settings, other than those identified by the configuration routine 144, have been manually selected by a user. In one embodiment, a control panel is provided to allow the user to set specific communication settings desired to be used and/or tested. For example, when a previous test of an AGP communication mode found AGP communication to have failed using a 4X transfer rate, the user can request retesting of an AGP communication mode at another transfer rate, such as a 1X transfer rate. A user may also have modified the communication settings during a previous session. If the settings identified by the configuration routine 144, e.g., in step 260, have not been modified (and are not going to be modified) by the user, the settings identified based on stored test results 146 are used to initialize the graphics device 120. Thereafter, graphics device 120 is set to communicate with the motherboard or chipset 122 of the system 100 based on the identified settings, and system 100 continues to run as shown at step 275. Alternatively, if the user-modified settings conflict with settings identified by the configuration routine 144, the user-modified settings may need to be tested. In step 270, if the user-modified settings conflict with the settings identified based on the test results 146, the flow transitions to step 230, wherein the configuration routine 144 (Fig. 3) is run to determine if the user-modified settings provide a valid and stable communication mode.

Referring again to FIG. 3, if the settings to be tested are modified by a user, as identified in step 310, the selected user modification is preferably analyzed in step 340 to determine if the user-modification is "known good," i.e., a communication mode known to be valid by the graphics driver 142. For example, the user-modified settings can be compared to test results 146 obtained from a previous run of the configuration routine 144 Generally, a user-modified setting can be considered to be known good if previous tests found the modified setting to be operational . Alternatively, if the user-modified setting did not pass previous tests or has not been tested in prior runs of the configuration routine 144, the user-modified setting is not considered known good. In one embodiment, if the user-modified setting is simply disabling a particular setting previously enabled by the graphics driver 142, no further testing may be required. Accordingly, settings that are disabled by a user can be considered known good. In step 350, if the user-modified settings analyzed in step 340 are considered known good, a successful return is performed. Accordingly, the configuration routine 144 can stop running and control can be returned to the graphics driver 142. In the case of a successful return, the current settings, including settings based on test results 146 and user modifications, can be used to configure an appropriate and stable communication mode for graphics device 120.

In step 360, if at least one of the user-modified settings was not considered known good, the user-modified settings that are not known good are validated by configuration routine 144. As described above, validation includes performing specific tests, such as those described above, that are related to the settings that were not considered known good. For example, in one embodiment, the user may request AGP communication with a data rate of 2X. Accordingly, the graphics device 120 and the motherboard of the system 100 can be set to communicate at the AGP 2X data rate. Read and/or write tests, such as block transfers between local memory 123 of the graphics device 120 and system memory 140, can be used to determine if the AGP 2X communication is valid. As indicated, the tests run by configuration routine 144 in this step are similar to those in the set of tests performed in step 330. Particular portions of the set of tests can be performed based on the particular setting that the user modified. If the validation test (or tests) performed in step 360 indicates that the user-modified communication setting is valid, a successful return is performed to allow the user-modified setting to be used in the communication mode being configured for graphics device 120. Alternatively, in step 390, if the validation test indicates that the user-modified setting is not valid, a non-successful return is initiated. A non-successful return can provide an indication that the specific user-modified setting is invalid, and preferably allows an alternative communication mode that is known to be stable to be configured for the graphics device 120. In one embodiment, system registry portions are used to provide indicators on whether the particular user-modified settings were successfully or non-successfully validated.

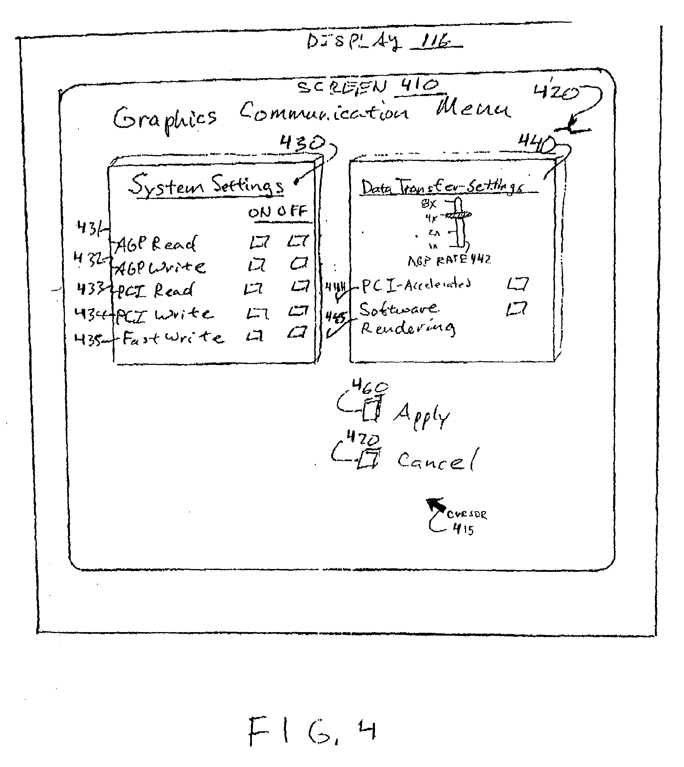

Referring to FIG. 4, a graphical user interface (GUI) is illustrated, according to one embodiment of the present disclosure. The GUI is displayed on a screen 410 of display device 116 and is provided for "manual" graphics communication mode configuration by the end user. This interface may be accessed at any time by the end user to change the settings that are responsible for graphics communication and control. This provision still allows an experienced end user the ability to make changes using a trial and error approach as well as to select default communication settings to use in a configuration test. Default communication settings include the selection of preferred data transfer settings 440 as well as other system settings 430. In one embodiment, for example, an end user may enable or disable AGP and PCI read and write functions as well as fast write functions. In the illustrated embodiment of FIG. 4, selections are made within a graphics communication menu 420 by user manipulation of a cursor 415. Cursor 415 represents a selection arrow, such as a mouse cursor used by the user to interface with the graphics communication menu 420.

According to one embodiment, system settings 430 are used to manually enable or disable graphics communication settings such as AGP read 431, AGP write 432, PCI read 433, PCI write 434, and fast write 435. System settings 430 may include other graphics communication settings that affect system performance such as a fast write settings. In another embodiment, system settings 430 are used as the default settings in a configuration test, such as performed by configuration routine 144 (FIG. 1).

Data transfer settings 440 in FIG. 4 are used to manually select particular transfer settings to be used. For example, a user may select to apply PCI-accelerated rendering 444 or software rendering 445 in place of AGP-accelerated rendering. Alternatively, a user can select an AGP transfer rate to be used, such as through AGP rate control 442. AGP rate control 442 can include a control bar to select one of a plurality of AGP transfer rates that may work, such as AGP 1X, AGP 2X, AGP 4X or AGP 8X rates. In one embodiment, some communication functionality may not be available depending upon the system configuration and/or installed hardware, such as when an AGP bus is not present. In another embodiment, data transfer settings 440 are used as default settings in a subsequent configuration test. While data transfer settings 440 only illustrate AGP and PCI communication modes in FIG. 4, other data bus protocols can be supported without departing from the scope of the present disclosure. For example, a PCI-Express rate control (not shown) can be provided to allow a user to select a transfer rate to be used with a PCI-Express data bus. Furthermore, a user can be provided with a control setting to identify a number of signal lanes to be used in transferring data associated with a PCI-Express data bus.

As described above, in one embodiment, all settings requested by a user are compared against stored test results 146. If a requested setting has not been tested, or has failed previous tests, the setting is tested prior to being configured. Since such testing and/or configuration may require a reboot, a pop-up window can also be provided to allow the user to select if he or she wishes to reboot. If the user does not reboot, the requested setting or settings are not enabled until a reboot is performed. It will be appreciated that other communication settings may be provided for user control and other forms of providing user intervention can be incorporated and the interface and graphics communication menu 420, illustrated are only one example of how user support may be implemented.

The systems described herein may be part of an information handling system. The term "information handling system" refers to any system that is capable of processing information or transferring information from one source to another. An information handling system may be a single device, such as a computer, a personal digital assistant (PDA), a hand held computing device, a cable set top box, an internet capable device, such as a cellular phone, and the like. Alternatively, an information handling system may refer to a collection of such devices. It will be appreciated that the system described herein has the advantage of automatically identifying compatible settings between a graphics device and a chipset, or host bridge.

In the preceding detailed description of the embodiments, reference has been made to the accompanying drawings which form a part thereof, and in which is shown by way of illustration specific embodiments win which the disclosure may be practiced. These embodiments are described in sufficient detail to enable those skilled in the art to practice the disclosure, and it is to be understood that other embodiments may be utilized and that logical, mechanical and electrical changes may be made without departing from the spirit or scope of the disclosure. To avoid detail not necessary to enable those skilled in the art to practice the disclosure, the description may omit certain information known to those skilled in the art. Furthermore, many other varied embodiments that incorporate the teachings of the disclosure may be easily constructed by those skilled in the art.

For example, specific routines for the tests indicated in TABLE 1 have not been indicated. It will be appreciated, however, that various types or modes of transfers can be verified by writing and reading known sets of data using the specific modes. For example, block transfers can be performed and verified as part of the test procedures. Block transfers can be performed between system memory and local memory associated with the graphics device. It should be noted that tests such as block transfers do not require excessive processing by the graphics device, allowing the communications to be tested between the graphics device and the system without unduly risking crashing or hanging of the graphics device, as can occur due to corrupted commands received by the graphics device during faulty communications. It should be noted that in the event of a hanging graphics device, a timeout can be exceeded indicating the graphics device did not respond.

Accordingly, the present disclosure in not intended to be limited to the specific form set forth herein, but, on the contrary, it is intended to cover such alternatives, modifications, and equivalents, as can be reasonably included within the spirit and scope of the disclosure. The preceding detailed description is, therefore, not to be taken in a limiting sense.

## Claims

1. A method of configuring graphics processing communication during a boot process of a system having a graphics device, the method comprising:
generating a set of test results for the graphics device with the system configured in a first communication mode, wherein the first communication mode includes one or more communication settings; and,
when the test results indicate that the first communication mode is not stable, configuring the system in a second communication mode, wherein the second communication mode includes at least one communication setting that is different than the settings in the first communication mode.

2. A method according to Claim 1, in which the test results are indicative of the stability of communication between the graphics device and a graphics data bus of the system.

3. The method according to Claim 1 or Claim 2, further including, when the test results indicate that the first communication mode is not stable, automatically continuing the boot process, without intervention from a user, with the system configured in the second communication mode.

4. The method according to any one of the preceding claims, wherein generating the test results is accomplished using a configuration routine.

5. The method according to Claim 4, including installing the configuration routine during a startup of the system prior to generating the test results.

6. The method according to any one of the preceding claims, further including storing the test results in a non-volatile storage.

7. The method according to any one of the preceding claims, wherein the test results identify one or more unstable communication settings and the second configuration mode does not include any of the unstable communication settings.

8. The method according to any one of the preceding claims, wherein generating the test results includes testing the validity of block transfers performed using a data bus of the system.

9. The method according to any one of the preceding claims, further comprising configuring the system in the first communication mode prior to generating the test results.

10. The method according to any one of the preceding claims, wherein the first communication mode includes a first data bus transfer rate setting, the second communication mode includes a second data bus transfer rate setting, and the first data bus transfer rate setting is faster than the second data bus transfer rate setting.

11. The method according to any one of the preceding claims, wherein the first communication mode includes an enabled accelerated graphics port (AGP) support setting and the second communication mode includes an enabled peripheral component interconnect (PCI) mode setting.

12. The method according to any one of the preceding claims, wherein the second communication mode includes a software rendering-enabled setting for graphics data.

13. The method according to any one of the preceding claims, further including providing an interface to a user allowing the user to modify one or more communication settings.

14. The method as in Claim 13, further comprising determining whether a user-modified communication setting will be stable based on previously generated test results.

15. The method according to Claim 2 or any claim dependent thereon,
wherein the graphics data bus is an accelerated graphics port (AGP) data bus, or a Peripheral Component Interconnect Express (PCI-Express) data bus.

16. A method according to any one of the preceding claims, comprising the steps of:
during a first boot sequence for the system, testing communication between a data bus of the system and a data port of a graphics device with the system in a first communication mode for rendering graphics wherein the first communication mode includes one or more communication settings;
storing data indicative of whether the first communication mode for rendering graphics is stable;
when testing indicates that the first communication mode for rendering graphics is not stable, configuring the system to automatically enter the second communication mode upon a subsequent boot sequence, wherein the second communication mode includes settings that provide for more stable communication between the graphics device and the graphics data bus than the first communication mode.

17. The method as in Claim 16, further comprising, when testing indicates that the first communication mode for rendering graphics is not stable, configuring the system in a third communication mode for rendering graphics and continuing the first boot sequence with the system in said third communication mode, wherein the third communication mode includes settings that provide for more stable communication between the graphics device and the graphics data bus than the second communication mode.

18. A graphics processing system comprising:
a data processor;
a system memory having an input/output buffer;
a graphics device having an input port;
a graphics data bus, having an input/output buffer, for communicating with the graphics device;
a chipset having a first port coupled to the input/output buffer of the data bus, a second port coupled to the input/output buffer of the system memory, and a third port coupled to the input/output port of the graphics device;
wherein the system memory further comprises software, executable by the data processor, for generating a set of test results for the graphics device with the system configured in a first communication mode, wherein the first communication mode includes one or more communication settings, and the test results are indicative of the stability of communication between the graphics device and the graphics data bus; and,
configuring the system in a second communication mode, when the test results indicate that the first communication mode is not stable, wherein the second communication mode includes settings that provide for more stable communication between the graphics device and the graphics data bus.

19. A computer readable medium tangibly embodying a program of instructions for configuring graphics processing communication during a boot process of a system having a graphics device, wherein, when executed, the program of instructions:
generates a set of test results for the graphics device with the system configured in a first communication mode, wherein the first communication mode includes one or more communication settings, and the test results are indicative of the stability of communication between the graphics device and a graphics data bus of the system; and,
when the test results indicate that the first communication mode is not stable, configures the system in a second communication mode, wherein the second communication mode includes settings that provide for more stable communication between the graphics device and the graphics data bus.
